# EUROPEAN PATENT SPECIFICATION

(11) **EP 2 778 469 B1**
(45) Date of publication and mention of the grant of the patent: **02.03.2016**
(21) Application number: 14158479.7
(22) Date of filing: 10.03.2014
(51) Int. Cl.: F16H 1/28, B60K 7/00, B60K 17/04

(54) **Wheel driving apparatus**
Radantreibende Vorrichtung
Appareil d'entraînement de roue

(30) Priority: 14.03.2013 JP 2013052356
(43) Date of publication of application: 17.09.2014
(73) Proprietor: SUMITOMO HEAVY INDUSTRIES, LTD., Tokyo 141-6025 (JP)
(72) Inventor: Ishizuka, Masayuki, Kanagawa, 237-8555 (JP)
(74) Representative: Walcher, Armin

(56) References cited:
- EP-A1- 2 581 253
- DE-A1-102010 047 144
- GB-A- 2 405 386
- JOHANNES LOOMAN: "BELASTUNGSAUSGLEICH IN PLANETENBETRIEBE", ZAHNRADGETRIEBE. GRUNDLAGEN, KONSTRUKTIONEN, ANWENDUNGEN INFAHRZEUGEN, SPRINGER VERLAG, BERLIN, DE, 1 January 1996 (1996-01-01), pages 118-121, XP002431030,

## Description

### Field of the Invention

The present invention relates to a wheel driving apparatus.

### Description of Related Art

International Publication No. WO 00136317 discloses a structure in which a planetary gear mechanism and a disc brake as reduction gears are accommodated inside a casing of a wheel driving apparatus.

In addition, there is a known structure in which a mast is tiltable throughout a predetermined angle range by providing a trunnion member below the mast which elevates a fork of a forklift and bearing the trunnion member in an oscillatable manner with respect to a drive axle of a vehicle (for example, Japanese Unexamined Patent Application Publication No.2008-222362). In this structure, it is possible to effectively utilize a dead space of the drive axle and to dispose the mast to be close to the drive axle, and thus, there is an advantage in that weight of the mast can be reduced.

Patent Application DE102010047144 A1 discloses a planetary gear the rings of which are separated by a gap.

Moreover, published Patent Application GB 2405386 A discloses an electric drive assembly according to the preamble of claim 1.

General background about the compensation of loads in gears may further be found in literature (e.g. JOHANNES LOOMAN: "ZAHNRADGETRIEBE. GRUNDLAGEN, KONSTRUKTIONEN, ANWENDUNGEN INFAHRZEUGEN", SPRINGER VERLAG, BERLIN, 1996-01-01, pages 118-121).

Since a trunnion member supports both a mast of a forklift and cargo on board, an extremely heavy load may be applied thereto. In an in-wheel motor-type forklift in which a wheel driving apparatus disclosed in International Publication No. WO 00136317 is incorporated with a drive axle, when bearing the trunnion member with a casing of the wheel driving apparatus as in Japanese Unexamined Patent Application Publication No. 2008-222362, the load from the trunnion member is transmitted to the casing. This load causes deformation of the casing and deterioration in meshing of a gear mechanism accommodated inside the casing, and thus, there is a possibility that noise and vibration may be generated in the wheel driving apparatus.

### SUMMARY OF THE INVENTION

There is a need for the wheel driving apparatus in which a reduction gear mechanism section is disposed inside the casing and the trunnion member which supports the mast of the forklift is disposed on an outer periphery of the casing to be provided with a structure to prevent the deterioration in the meshing of the reduction gear mechanism section due to the load applied by the trunnion member.

According to an embodiment of the present invention that is defined in claim 1, there is provided a wheel driving apparatus that drives a wheel of a forklift, including a casing; and a reduction gear mechanism section that is disposed inside the casing. A trunnion disposition portion in which a trunnion member is disposed to support a mast of the forklift is provided on the outer periphery of the casing, and an internal gear that configures the reduction gear mechanism section is provided inside the trunnion disposition portion in a radial direction. The internal gear is configured to include an internal tooth element which is independent from the casing. The internal tooth element is fixed to the casing in a state of being provided with a gap with respect to an inner periphery of the casing.

According to this embodiment, the deformation of the casing due to the load applied by the trunnion member can be absorbed into a gap between an internal tooth element and the casing, and thus, it is possible to prevent the deformation of an internal gear and the deterioration in the meshing of the reduction gear mechanism section.

As certain effective embodiments of the present invention, the above-described configuration elements may be subject to an arbitrary combination, and the configuration elements and expressions in certain embodiments of the present invention may be mutually replaced between methods, apparatuses, systems and the like.

According to the present invention, a reduction gear mechanism section is disposed inside a casing, and it is possible to prevent deterioration in meshing of the reduction gear mechanism section due to a load applied by a trunnion member in a wheel driving apparatus in which the trunnion member supporting a mast of a forklift is disposed on an outer periphery of a casing.

### BRIEF DESCRIPTION OF THE DRAWINGS

Fig. 1 is a cross-sectional view of a wheel driving apparatus according to an embodiment of the present invention when cut in a vertical plane including a central shaft.
Fig. 2 is an enlarged view of the portion X in Fig. 1.

### DETAILED DESCRIPTION OF THE INVENTION

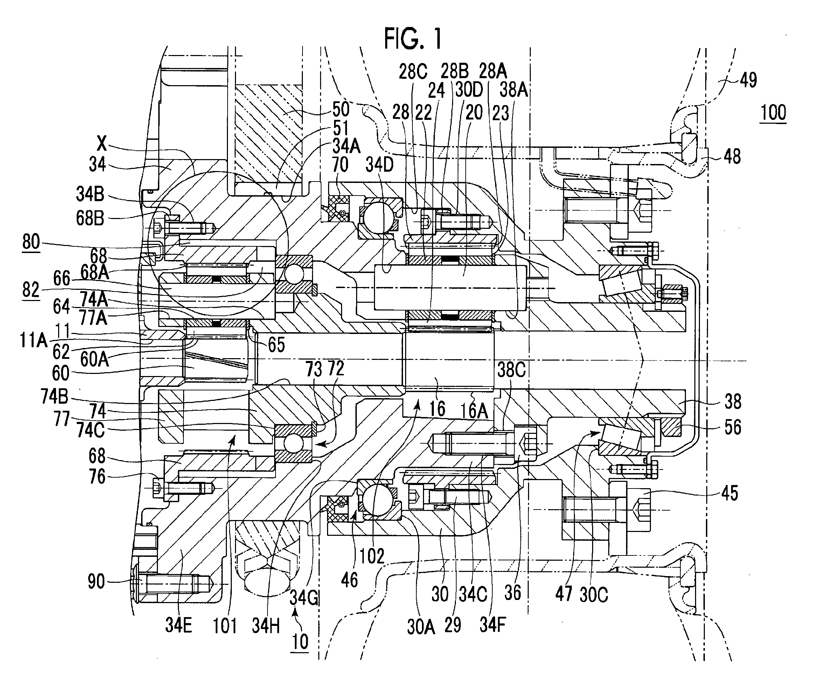

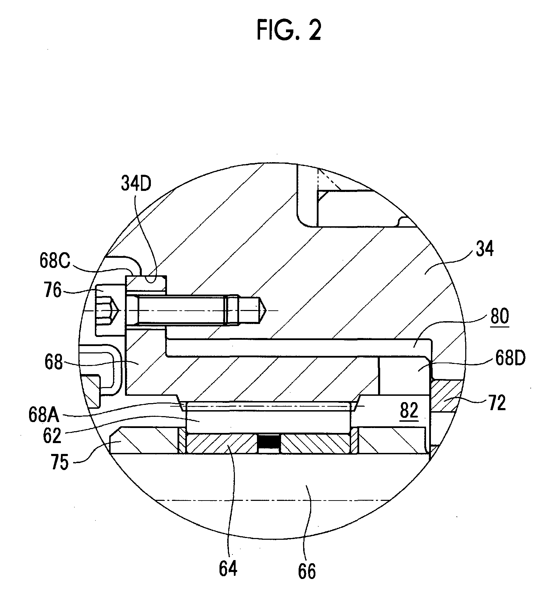

Fig. 1 is a cross-sectional view of a wheel driving apparatus 100 according to a certain embodiment of the present invention when cut in a vertical plane including a central shaft. Fig. 2 is an enlarged view of the portion X in Fig. 1.

The wheel driving apparatus 100 includes a reduction gear 10 and a motor (not illustrated) that may be connected to the reduction gear 10 on the left side in Fig. 1, that is, on a vehicle body side. The reduction gear 10 may be a multi-step reduction gear consisting of a first step reduction gear mechanism section 101 which is disposed inside a first casing 34, and a second step reduction gear mechanism section 102 which is disposed inside a second casing 30. Both of the first step reduction gear mechanism section 101 and the second step reduction gear mechanism section 102 may be simple planetary-type planetary gears.

Rotations from the motor may be input to the first step reduction gear mechanism section 101, and the rotations slowed by the first step reduction gear mechanism section 101 may be input to the second step reduction gear mechanism section 102. The rotations further slowed by the second step reduction gear mechanism section 102 may be output from the second casing 30, thereby conclusively driving a wheel of the forklift.

A penetration hole 11A extending in a shaft direction may be formed around an output shaft 11 of the motor, and an input shaft 60 of the first step reduction gear mechanism section 101 may be press-fit into the penetration hole 11A. An external gear 60A which functions as a sun gear of the first step reduction gear mechanism section 101 may be formed in a portion of the input shaft 60 on an outside of the output shaft 11. The external gear 60A may be formed as a member independent from the input shaft 60 to be press-fit into the input shaft 60.

A plurality (for example, three) of planetary gears 62 may be disposed to be circumscribed meshing with the external gear 60A. The planetary gear 62 may be inscribed meshing with an internal gear 68A which is formed on an inner peripheral surface of an internal tooth element 68. The internal tooth element 68 and the first casing 34 may be formed independently from each other. Both may be fastened to each other by screwing a bolt 76 into a tapped hole 34B which is formed in the first casing 34 through a hole 68B which is formed in the internal tooth element 68.

A flange-shaped vehicle body fixing portion 34E extending outward in a radial direction may be formed in the first casing 34, and this vehicle body fixing portion 34E may be fixed to a vehicle body frame (not illustrated) by a bolt 90. Therefore, since the internal gear 68A can also be fixed to the vehicle body frame, the planetary gear 62 orbits about a sun gear 60A while rotating on its axis.

A planetary pin 66 may be supported by a first carrier body 74 so as to extend in the shaft direction at a position offset from a shaft center of the internal gear 68A. The planetary pin 66 may be fit into a hole 77A which is formed in an end plate 77 and press-fit into a recess portion 74A which is formed in the first carrier body 74.

An outer side surface of an intermediate portion of the planetary pin 66 and the planetary gear 62 may be in contact with each other through a plurality of rollers 64 to configure a bearing which supports the planetary gear 62 to be rotatable on its axis with respect to the planetary pin 66. A movement of the plurality of rollers 64 in the shaft direction may be regulated by a plate 65 which is disposed at both ends in the shaft direction.

A first bearing 72 may be fit into a recess portion 34H which is formed on an inner periphery of the first casing 34. In addition, the first bearing 72 may be fixed to the first carrier body 74 by a shoulder portion 74C and a locating snap ring 73 which are formed in the first carrier body 74. The first carrier body 74 may be rotatably supported by the inner periphery of the first casing 34 through this first bearing 72.

A penetration hole 74B extending in the shaft direction may be formed in the first carrier body 74, and an input shaft 16 of the second step reduction gear mechanism section 102 may be press-fit into the penetration hole 74B. An external gear 16A which functions as the sun gear of the second step reduction gear mechanism section 102 may be formed in a portion of the input shaft 16 on the outside of the first carrier body 74. The external gear 16A may be formed as a member independent from the input shaft to be press-fit into the input shaft 16.

A plurality (for example, three) of planetary gears 24 may be disposed to be circumscribed meshing with the external gear 16A. The planetary gear 24 may be inscribed meshing with an internal gear 28A which is formed on an inner peripheral surface of an internal tooth element 28. The internal tooth element 28 and the second casing 30 may be formed independently from each other. Both may be fastened to each other by screwing a bolt 29 into a tapped hole 30D which is formed in the second casing 30 through a hole 28B which is formed in the internal tooth element 28. A back facing hole 28C may be formed in the internal tooth element 28 so as to accommodate a head portion of the bolt 29 inside the back facing hole. The internal tooth element 28 and the second casing 30 may be integrally formed with each other.

A second carrier body 38 which is integrally connected to the first casing 34 through a bolt 36 and a planetary pin 20 may be disposed on an opposite side of the vehicle body (outer side of vehicle body) of the planetary gear 24 in the shaft direction.

The planetary pin (planetary shaft) 20 may be supported by the first casing 34 and the second carrier body 38 so as to extend in the shaft direction at a position offset from a shaft center of the internal gear 28A. Both ends of the planetary pin 20 may be respectively fit into a recess portion 34D which is formed in the first casing 34 and a recess portion 38A which is formed in the second carrier body 38. An orbital movement of the planetary pin (planetary shaft) 20 may be regulated by supporting the planetary pin 20 with the first casing 34 and the second carrier body 38.

An outer side surface of an intermediate portion of the planetary pin 20 and the planetary gear 24 may be in contact with each other through a plurality of rollers 22 to configure the bearing which supports the planetary gear 24 to be rotatable on its axis with respect to the planetary pin 20. A movement of the plurality of rollers 22 in the shaft direction may be regulated by a plate 23 which is disposed at both ends in the shaft direction.

A pillar portion 34C extending outward in the shaft direction may be formed in a portion of the first casing 34 which does not support the planetary gear 24. A tapped hole 34F may be formed on an outside end surface of this pillar portion 34C in the shaft direction. A back facing hole 38C may be formed in a portion facing the pillar portion 34C of the second carrier body 38. The first casing 34 and the second carrier body 38 are fastened to each other by screwing a bolt 36 into the tapped hole 34F through the back facing hole 38C. A structure corresponding to the pillar portion 34C may be formed on the second carrier body 38 side.

The second casing 30 of the reduction gear 10 may be in a substantially cylinder shape. A second main bearing 46 may be fit into a recess portion 30A which is formed on an inner periphery on an inner side of the vehicle body of the second casing 30, and the second casing 30 may be rotatably supported by an outer periphery of the first casing 34 through the second main bearing 46. In addition, the second casing 30 has a reduced diameter portion on the outer side of the vehicle body, and a third main bearing 47 may be fit into a recess portion 30C which is formed on an inner periphery of this reduced diameter portion. The second casing 30 may be rotatably supported on an outer periphery of the second carrier body 38 through this third main bearing 47. The second main bearing 46 and the third main bearing 47 may be press-fit with respect to the second casing 30 or fixed to the second casing 30 using a locating snap ring (not illustrated) after being loosely fit.

The second main bearing 46 and the third main bearing 47 may be open-type bearings and can be lubricated using a lubricant sealed inside the second casing 30.

A wheel 48 may be connected to an end surface on the outer side of the vehicle body of the second casing 30 by a bolt 45, and a tire 49 of the forklift (not illustrated) may be mounted on this wheel 48. The second step reduction gear mechanism section 102 may be accommodated within a range (within range of two-dot chain line in Fig. 1) of the tire 49 in the shaft direction.

A bearing nut 56 may be screwed into a tapped hole formed on an outer peripheral surface of the second carrier body 38. A movement of the second casing 30, into which the second main bearing 46 and the third main bearing 47 are fit, in the shaft direction may be regulated by the bearing nut 56.

An inner ring of the second main bearing 46 may be fit into a shoulder portion formed on the outer periphery of the first casing 34, and a movement of the inner ring in the shaft direction may be regulated by an inner ring regulation surface 34G on the inner side of the vehicle body.

An oil seal 70 which seals a gap between an inner peripheral surface of the second casing 30 and an outer peripheral surface of the first casing 34 may also be provided further on an inner side of the vehicle body than the second main bearing 46.

Subsequently, an operation of the wheel driving apparatus 100 will be described. A rotation of the output shaft 11 of the motor (not illustrated) may be transmitted to the input shaft 60 of the first step reduction gear mechanism section 101. If the input shaft 60 rotates, the sun gear 60A rotates. Since the internal gear 68A is fixed, the planetary gear 62 orbits about a sun gear 60A while rotating on its axis. The first carrier body 74 which is connected to the planetary gear 62 using the planetary pin 66 rotates at a rotational speed which is reduced with respect to the rotation of the input shaft 60 in accordance with differences in the tooth numbers between the sun gear and the planetary gear and between the planetary gear and the internal gear.

The rotation of the first carrier body 74 may be transmitted to the input shaft 16 of the second step reduction gear mechanism section 102. If the input shaft 16 rotates, the sun gear 16A rotates, and thus, the planetary gear 24 of which the orbital movement is regulated by the planetary pin 20 rotates on its axis. The second casing 30 which is integrated with the internal gear 28A rotates at a rotational speed which is reduced with respect to the rotation of the input shaft 16 in accordance with the differences of the tooth numbers between the sun gear and the planetary gear and between the planetary gear and the internal gear. In this manner, a rotational output of the reduction gear may be derived from the second casing 30, thereby rotating the tire 49 of the forklift through the wheel 48 which is fixed to the second casing 30 using the bolt 45.

A trunnion disposition portion 34A having a slide surface may be formed on the outer periphery of the first casing 34. A trunnion member 50 which is formed in a lower portion of the mast of the forklift may be attached to this trunnion disposition portion 34A through a slide bearing 51. It is possible to tilt the mast of the forklift with respect to the wheel driving apparatus 100 by rotating the trunnion member 50 around the first casing 34 by a driving apparatus (not illustrated).

As described above, since the trunnion member 50 supports both the mast of the forklift and the cargo on board, the extremely heavy load may be applied to the first casing 34 in which the trunnion member 50 is disposed, and thus, the first casing 34 deforms to a certain amount. In order to prevent the internal gear 68A of the first step reduction gear mechanism section 101 from being distorted due to this deformation, the internal tooth element 68 having the internal gear 68Amaybe a member independent from the first casing 34 in the present embodiment. Moreover, an inner diameter and an outer diameter of both may be set so as to form a ring-shaped gap 80 extending in the shaft direction between an inner peripheral surface of the first casing 34 and an outer peripheral surface of the internal tooth element 68. A width of this gap 80 in the radial direction can be set greater than the deforming amount of the first casing 34 inward to the inner diameter side due to an assumedmaximum load from the trunnion member 50.

Even if the trunnion disposition portion 34A of the first casing 34 deforms inward to the inner diameter side due to the load from the trunnion member 50, since the deformed portion is absorbed by the gap 80, there may be little or no chance that the internal tooth element 68 is deformed. Therefore, it is possible to prevent noise and vibration from being generated without causing deterioration in meshing of the first step reduction gear mechanism section 101.

A spigot joint portion 68C which is spigot-fit to the recess portion 34D of the first casing 34 may be provided in the internal tooth element 68. Accordingly, it is possible that accuracy of concentricity between the internal tooth element 68 and the first casing 34 which are members independent fromeach other is enhanced, a smooth operation of the first step reduction gear mechanism section 101 is ensured, and the load of the first step reduction gear mechanism section 101 is supported by the spigot joint portion. If the sufficient concentricity can be acquired, the internal tooth element 68 and the first casing 34 may be connected to each other using only a bolt without providing a spigot joint portion.

The spigot joint portion 68C can be provided inside the vehicle body fixing portion 34E of the first casing 34 in the radial direction. Accordingly, since a length of the gap 80 in the shaft direction can be set longer than a width of the internal gear 68A, it is possible to completely prevent the internal gear 68A from being influenced by the deformation of the first casing 34.

The gap 80 between the first casing 34 and the internal tooth element 68 and a space 82 inside the first step reduction gear mechanism section 101 may be partitioned by abutment into an end surface on the opposite side of the vehicle body of the internal tooth element 68 and an end surface on the vehicle body side of the first bearing 72. A plurality of guide channels 68D may be formed in a circumferential direction on the end surface on the opposite side of the vehicle body of the internal tooth element 68. Since the guide channel 68D may be the only portion which does not abut on the internal tooth element 68 and the first bearing 72, the lubricant inside the space 82 is guided into the gap 80.

A method of assembling the above-described wheel driving apparatus 100 will be described. 1. An outer ring of the second main bearing 46, an outer ring of the third main bearing 47, the oil seal 70 and the internal tooth element 28 may be individually assembled and installed inside the second casing 30. 2. The second carrier body 38, the planetary pin 20 and the planetary gear 24 may be assembled and installed outside the first casing 34 while assembling and installing the first bearing 72, the first carrier body 74, the planetary pin 66, the planetary gear 62 and the plate 65 inside the first casing 34. 3. The inner rings and rolling elements of the second main bearing 46 and the third main bearing 47 may be assembled and installed in the members which are assembled and installed in the above process 2 and may be inserted into the members which are assembled and installed in the above process 1. 4. The internal tooth element 68 may be inserted therein so as to cause the internal gear 68A and the planetary gear 62 to mesh with each other. 5. The internal tooth element 68 may be fixed to the first casing 34 using the bolt 76.

As described above, according to the present embodiment, in the wheel driving apparatus having the structure in which the trunnion member supporting the mast of the forklift is disposed on the outer periphery of the first casing in which the first step reduction gear mechanism section is accommodated, the inner periphery of the first casing and the internal tooth element having the internal gear of the first step reduction gear mechanism section may be independent from each other and then, both the inner periphery and the internal tooth element may be fixed in a state where a gap is provided therebetween. As a result, the deformation of the first casing due to the load applied by the trunnion member can be absorbed by the gap between the internal tooth element and the first casing, and thus, causing the least deformation on the internal gear, it is possible to prevent the deterioration in the meshing of the first step reduction gear mechanism section.

Hereinbefore, the embodiment according to the present invention has been described. This embodiment is merely an example. It is understood by those skilled in the art that various modification examples can be made in combinations with each configuration element thereof, and the modification examples are included within the range of certain embodiments of the present invention as defined in the claims.

The simple planetary-type planetary reduction gear is described in the embodiment. However, it is not limited to this type of the reduction gear. It is possible to use an arbitrary type reduction gear mechanism such as an eccentric oscillation meshing type planetary reduction gear as the first step reduction gear mechanism section and/or the second step reduction gear mechanism section, for example, a type in which a plurality of eccentric body shafts (planetary shaft) are disposed in a position offset from the center of the internal gear and a bearing is disposed between an oscillating external gear and the eccentric body shaft, or a type in which the eccentric body shaft is disposed on the center of the internal gear. In addition, the number of reduction steps may be a single step or three steps or more without being limited to two steps.

## Claims

1. A wheel driving apparatus (100) that drives a wheel (48) of a forklift, comprising:
a casing (34); and
a reduction gear mechanism section (101) that is disposed inside the casing (34),
wherein a trunnion disposition portion (34A) in which a trunnion member (50) is disposed to support a mast of the forklift is provided on an outer periphery of the casing (34), and an internal gear (68A) that configures the reduction gear mechanism section (101) is provided on an inner side of the trunnion disposition portion (34A) in a radial direction,
wherein the internal gear (68A) is configured to include an internal tooth element (68) which is independent from the casing (34),
**characterized in that**
the internal tooth element (68) is fixed to the casing (34) in a state of being provided with a gap (80) with respect to an inner periphery of the casing (34),
and that the internal tooth element (68) includes a spigot joint portion (68C) which is spigot-fit to the inner periphery of the casing (34).

2. The wheel driving apparatus (100) according to Claim 1,
wherein a vehicle body fixing portion (34E) to be fixed to a vehicle body of the forklift is provided in the casing (34), and the spigot joint portion (68C) is provided on an inner side of the vehicle body fixing portion in the radial direction.

3. The wheel driving apparatus (100) according to any one of Claims 1 to 2,
wherein a guide channel (68D) is provided to guide a lubricant inside the reduction gear mechanism section (101) into the gap (80) between the casing (34) and the internal tooth element (68).

4. The wheel driving apparatus (100) according to Claim 3,
wherein the gap (80) between the casing (34) and the internal tooth element (68) and a space (82) inside the reduction gear mechanism section (101) are partitioned by abutment into a bearing which rotatably supports a carrier body (74) of the reduction gear mechanism section (101) and the internal tooth element (68), and a plurality of guide channels are provided on an abutment surface between the internal tooth element (68) and the bearing in a circumferential direction.

## Patentansprüche

1. Radantriebsvorrichtung (100), die ein Rad (48) eines Gabelstaplers antreibt und Folgendes umfasst:
ein Gehäuse (34); und
einen Untersetzungsgetriebemechanismus-Abschnitt (101), der in dem Gehäuse (34) angeordnet ist,
wobei ein Drehzapfenanordnungsabschnitt (34A), in dem ein Drehzapfenelement (50) angeordnet ist, um einen Mast des Gabelstaplers zu tragen, an einem äußeren Umfang des Gehäuses (34) vorgesehen ist und ein Hohlrad (68A), das den Untersetzungsgetriebemechanismus-Abschnitt (101) konfiguriert, in radialer Richtung an einer Innenseite des Drehzapfenanordnungsabschnitts (34A) vorgesehen ist,
wobei das Hohlrad (68A) so konfiguriert ist, dass es ein Innenzahnungselement (68) aufweist, das von dem Gehäuse (34) unabhängig ist,
**dadurch gekennzeichnet, dass**
das Innenzahnungselement (68) an dem Gehäuse (34) in einem Zustand befestigt ist, in dem es einen Spalt (80) in Bezug auf einen inneren Umfang des Gehäuses (34) bildet,
und das Innenzahnungselement (68) einen Zapfenverbindungsabschnitt (68C) aufweist, der am inneren Umfang des Gehäuses (34) durch Zapfenpassung angebracht ist.

2. Radantriebsvorrichtung (100) nach Anspruch 1,
wobei in dem Gehäuse (34) ein Fahrzeugkörper-Befestigungsabschnitt (34E), der an einem Fahrzeugkörper des Gabelstaplers zu befestigen ist, vorgesehen ist und der Zapfenverbindungsabschnitt (68C) in radialer Richtung an einer Innenseite des Fahrzeugkarosserie-Befestigungsabschnitts vorgesehen ist.

3. Radantriebsvorrichtung (100) nach einem der Ansprüche 1 bis 2,
wobei ein Führungskanal (68D) vorgesehen ist, um ein Schmiermittel in dem Untersetzungsgetriebemechanismus-Abschnitt (101) in den Spalt (80) zwischen dem Gehäuse (34) und dem Innenzahnungselement (68) zu führen.

4. Radantriebsvorrichtung (100) nach Anspruch 3,
wobei der Spalt (80) zwischen dem Gehäuse (34) und dem Innenzahnungselement (68) und ein Raum (82) in dem Untersetzungsgetriebemechanismus-Abschnitt (101) durch gegenseitiges Anliegen eines Lagers, das einen Trägerkörper (74) des Untersetzungsgetriebemechanismus-Abschnitts (101) drehbar trägt, und des Innenzahnungselements (68) unterteilt sind und mehrere Führungskanäle an einer Anschlagoberfläche zwischen dem Innenzahnungselement (68) und dem Lager in einer Umfangsrichtung vorgesehen sind.

## Revendications

1. Appareil d'entraînement de roue (100) qui entraîne une roue (48) d'un chariot élévateur, comprenant :
un carter (34) ; et
une section de mécanisme d'engrenage de réduction (101) qui est disposée à l'intérieur du carter (34),
dans lequel une partie de disposition de tourillon (34A) dans laquelle un élément de tourillon (50) est disposé pour supporter un mât du chariot élévateur, est prévue sur une périphérie externe du carter (34), et un engrenage interne (68A) qui configure la section de mécanisme d'engrenage de réduction (101), est prévu sur un côté interne de la partie de disposition de tourillon (34A) dans une direction radiale,
dans lequel l'engrenage interne (68A) est configuré pour comprendre un élément de dent interne (68) qui est indépendant du carter (34),
**caractérisé en ce que** :
l'élément de dent interne (68) est fixé au carter (34) dans un état dans lequel il est prévu avec un espace (80) par rapport à une périphérie interne du carter (34),
et **en ce que** l'élément de dent interne (68) comprend une partie de joint à emboîtement (68C) qui est montée par emboîtement sur la périphérie interne du carter (34).

2. Appareil d'entraînement de roue (100) selon la revendication 1,
dans lequel une partie de fixation de corps de véhicule (34E) destinée à être fixée sur un corps de véhicule du chariot élévateur est prévue dans le carter (34) et la partie de joint à emboîtement (68C) est prévue sur un côté interne de la partie de fixation de corps de véhicule dans la direction radiale.

3. Appareil d'entraînement de roue (100) selon l'une quelconque des revendications 1 à 2,
dans lequel un canal de guidage (68D) est prévu pour guider un lubrifiant à l'intérieur de la section de mécanisme d'engrenage de réduction (101) dans l'espace (80) entre le carter (34) et l'élément de dent interne (68).

4. Appareil d'entraînement de roue (100) selon la revendication 3,
dans lequel l'espace (80) entre le carter (34) et l'élément de dent interne (68) et un espace (82) à l'intérieur de la section de mécanisme d'engrenage de réduction (101) sont séparés par butée dans un palier qui supporte en rotation un corps porteur (74) de la section de mécanisme d'engrenage de réduction (101) et l'élément de dent interne (68), et une pluralité de canaux de guidage est prévue sur une surface de butée entre l'élément de dent interne (68) et le palier dans une direction circonférentielle.
